# NEUE EUROPÄISCHE PATENTSCHRIFT

(11) **EP 2 517 915 B2**
(45) Veröffentlichungstag und Bekanntmachung des Hinweises auf die Entscheidung über den Einspruch: **09.10.2019**
(45) Hinweis auf die Patenterteilung: 14.09.2016
(21) Anmeldenummer: 12165526.0
(22) Anmeldetag: 25.04.2012
(51) Int. Cl.: B60K 6/48, B60K 6/405, F16D 25/10, F16H 3/00, B60K 6/387, F16D 21/06

(54) **Hybrid-Antriebsstrang für ein Kraftfahrzeug**
Hybrid power train for a motor vehicle
Entraînement hybride pour un véhicule automobile

(30) Priorität: 27.04.2011 DE 102011100256
(43) Veröffentlichungstag der Anmeldung: 31.10.2012
(73) Patentinhaber: Magna PT B.V. & Co. KG, 74199 Untergruppenbach (DE)
(72) Erfinder: Gremplini, Hansi, 74379 Ingersheim (DE)
(74) Vertreter: Witte, Weller & Partner Patentanwälte mbB

(56) Entgegenhaltungen:
- EP-A2- 1 396 921
- DE-A1- 10 018 926
- DE-A1- 10 034 730
- DE-A1-102007 003 107
- DE-A1-102007 008 946
- DE-A1-102007 044 621
- DE-A1-102007 060 165
- DE-A1-102009 038 344
- DE-A1-102009 059 944
- DE-A1-102009 059 944
- DE-A1-102010 015 431
- FR-A1- 2 814 121
- FR-A1- 2 814 121
- US-A1- 2007 213 163
- US-A1- 2007 225 098
- US-A1- 2010 261 575

## Beschreibung

Die vorliegende Erfindung betrifft einen Antriebsstrang für ein Kraftfahrzeug, mit einem Antriebsmotor, mit einem Doppelkupplungsgetriebe, das eine Doppelkupplungsanordnung mit einer ersten und einer zweiten Reibkupplung aufweist, mit einer elektrischen Maschine, deren Rotor mit einem Eingangsglied der Doppelkupplungsanordnung (22) verbunden ist, und mit einer Fluidversorgungseinrichtung.

Auf dem Gebiet der Antriebsstränge für Kraftfahrzeuge besteht seit einigen Jahren ein Trend hin zu Hybrid-Antriebssträngen, bei denen Antriebsleistung sowohl von einem Antriebsmotor wie einem Verbrennungsmotor als auch von einer elektrischen Maschine bereitgestellt werden kann.

Aus dem Dokument DE 10 2007 003 107 A1 ist eine Dreifachkupplung für einen Hybridantrieb mit Doppelkupplungsgetriebe bekannt, wobei eine Kurbelwelle des Antriebsmotors über eine Trennkupplung mit einem Rotor einer elektrischen Maschine verbindbar ist, wobei der Rotor ferner mit einem Eingangsglied einer Doppelkupplungsanordnung verbunden ist.

Die drei Kupplungen sind radial ineinander verschachtelt. Daher hat diese Dreifachkupplung in radialer Richtung eine relativ voluminöse Bauweise.

Ferner ist aus dem Dokument DE 10 2007 008 946 A1 eine Doppelkupplungsanordnung für ein Doppelkupplungsgetriebe bekannt, wobei eine erste und eine zweite Lamellenkupplung der Doppelkupplungsanordnung in axialer Richtung benachbart zueinander angeordnet sind. Ein Außenlamellenträger von einer der zwei Reibkupplungen ist starr mit dem Rotor einer elektrischen Maschine verbunden. Eine Fluidversorgungseinrichtung weist einen in axialer Richtung neben der Doppelkupplungsanordnung angeordneten Radialabschnitt und einen sich in axialer Richtung in einen Bereich radial innerhalb der Doppelkupplungsanordnung erstreckenden Axialabschnitt auf.

Das Dokument EP-A-1 396 921 offenbart ein Antriebssystem. Das Antriebssystem umfasst eine Elektromaschine mit einer Statoranordnung und einer mit einem Antriebsorgan zur gemeinsamen Drehung um eine Drehachse verbundenen oder verbindbaren Rotoranordnung. Das Antriebsorgan ist durch die Elektromaschine und die Kupplungsanordnung umgebende Gehäuseanordnung mit zwei in axialer Richtung aufeinander folgenden Gehäusebereichen und einem zwischen den beiden Gehäusebereichen angeordneten Gehäusezwischenbereich, an dem die Statoranordnung der Elektromaschine getragen ist.

Das Dokument US 2010/0 261 575 A offenbart ein Doppelkupplungsgetriebe mit mehreren Gangstufen. Das Doppelkupplungsgetriebe beinhaltet eine erste Kupplung, eine zweite Kupplung und eine dritte Kupplung. Die erste Kupplung ist dazu konfiguriert, Drehmoment eines Antriebsmotors zu übertragen. Die zweite Kupplung ist dazu konfiguriert, einen ersten Satz von Vorwärtsgangstufen zu wählen. Die dritte Kupplung ist konfiguriert, einen zweiten Satz von Vorwärtsgangstufen alternierend mit dem ersten Satz auszuwählen. Die zweite und die dritte Kupplung sind jeweils dazu konfiguriert, einem kombinierten Drehmoment des elektrischen Motors und des Antriebsmotors während Schaltvorgängen in den jeweiligen Sätzen von Vorwärtsgangstufen standzuhalten, jedoch im Gegensatz zu der ersten Kupplung nicht dazu in der Lage, einem Drehmoment des Motors bei einem Anfahrvorgang standzuhalten.

Vor dem obigen Hintergrund ist es eine Aufgabe der vorliegenden Erfindung, einen verbesserten Antriebsstrang für ein Kraftfahrzeug anzugeben, der insbesondere in radialer Richtung kompakter baut.

Die obige Aufgabe wird durch einen Antriebsstrang gemäß Anspruch 1 gelöst, und wird durch einen Antriebsstrang gemäß Anspruch 2 gelöst.

Bei dem erfindungsgemäßen Antriebsstrang ist die elektrische Maschine folglich in Reihe zu der Doppelkupplungsanordnung angeordnet, wodurch insgesamt eine radial kompaktere Bauweise erzielt werden kann. Ferner ergeben sich in den einzelnen Baugruppen dieses Antriebsstranges aufgrund der radial kompakteren Bauweise geringere Fliehkräfte und Trägheitsmomente, so dass generell größere Drehzahlen möglich sind.

Die erste und die zweite Reibkupplung der Doppelkupplungsanordnung sind dabei vorzugsweise ebenfalls in axialer Richtung versetzt zueinander angeordnet, also ebenfalls in Reihe angeordnet.

Durch die sich zwischen der elektrischen Maschine und der Doppelkupplungsanordnung erstreckende Fluidversorgungseinrichtung kann eine Fluidversorgung der Doppelkupplungsanordnung gewährleistet werden. Hierbei kann die Fluidversorgungseinrichtung zum Kühlen von Reibkupplungen der Doppelkupplungsanordnung verwendet werden. Bevorzugt sind die Reibkupplungen ferner fluidisch betätigt, wobei über die Fluidversorgungseinrichtung auch ein Betätigungsdruck zum Betätigen der Reibkupplungen zugeführt werden kann.

Ferner ist es bei dieser Anordnung generell möglich, die Fluidversorgungseinrichtung auch zur Fluidversorgung von Abschnitten des Antriebsstranges zu verwenden, die in Längsrichtung von dem Antriebsmotor aus gesehen vor der Fluidversorgungseinrichtung angeordnet sind.

Bei dem Antriebsstrang gemäß Anspruch 1 weist die Fluidversorgungseinrichtung einen ersten Axialabschnitt auf, der mit dem Radialabschnitt verbunden ist und sich in einen Bereich radial innerhalb der Doppelkupplungsanordnung erstreckt.

Hierdurch kann die Doppelkupplungsanordnung mit Fluid versorgt werden, wie oben erwähnt.

Gemäß einer weiteren bevorzugten Ausführungsform weist die Fluidversorgungseinrichtung einen zweiten Axialabschnitt auf, der mit dem Radialabschnitt verbunden ist und sich in einen Bereich radial innerhalb der elektrischen Maschine erstreckt.

Auf diese Weise können Antriebsstrangabschnitte radial außerhalb des zweiten Axialabschnittes mit Fluid versorgt werden. Beispielsweise ist es möglich, die elektrische Maschine zu kühlen.

Von besonderem Vorzug ist es ferner, wenn der Rotor der elektrischen Maschine über eine Trennkupplung mit einer Ausgangswelle des Antriebsmotors verbunden ist.

Bei dieser Ausführungsform ist es möglich, die elektrische Maschine von dem Antriebsmotor abzukoppeln. Folglich ist es möglich, mit dem Antriebsstrang auch einen rein elektrischen Fahrbetrieb des Kraftfahrzeuges einzurichten.

Die Trennkupplung kann zudem über den zweiten Axialabschnitt mit Fluid versorgt werden.

Daher ist es bevorzugt, wenn die Trennkupplung fluidisch betätigbar ist.

In diesem Fall kann ein Druck zur Betätigung der Trennkupplung über den zweiten Axialabschnitt der Fluidversorgungseinrichtung zugeführt werden. Ferner ist auch ein Kühlen der Trennkupplung über den zweiten Axialabschnitt möglich.

Dabei ist es besonders bevorzugt, wenn die Trennkupplung radial innerhalb der elektrischen Maschine angeordnet ist, und insbesondere radial außerhalb des zweiten Axialabschnittes.

Auf diese Weise kann eine Fluidversorgung der Trennkupplung über den zweiten Axialabschnitt auf einfache Art und Weise erfolgen.

Gemäß einer weiteren bevorzugten Ausführungsform ist die Trennkupplung als normalerweise geschlossene Trennkupplung ausgebildet.

Hierbei kann bspw. eine Federanordnung dafür sorgen, dass die Fluidkupplung im Normalbetrieb (bei Antrieb über den Antriebsmotor) ständig geschlossen ist.

Lediglich für den Fall, dass die Trennkupplung geöffnet werden soll, ist in diesem Fall eine Betätigungskraft zum Öffnen der Trennkupplung aufzubringen. Hierdurch kann der Wirkungsgrad des Antriebsstranges verbessert werden.

Gemäß einer alternativen Ausführungsform ist die Trennkupplung als normalerweise offene Trennkupplung ausgebildet.

Da das Schließen einer Kupplung generell leichter zu steuern ist als das Öffnen einer Kupplung, ergibt sich generell eine bessere Ansteuerbarkeit der Trennkupplung. Hierdurch kann sich ein besserer Fahrkomfort ergeben.

Insgesamt ist es auch vorteilhaft, wenn der Rotor der elektrischen Maschine mit dem Eingangsglied der Doppelkupplungsanordnung über einen Wellenabschnitt verbunden ist, der radial innerhalb der Fluidversorgungseinrichtung angeordnet ist.

Auf diese Weise ist es möglich, den Rotor konstruktiv auf einfache Art und Weise mit dem Eingangsglied der Doppelkupplungsanordnung zu verbinden.

Besonders bevorzugt ist es dabei, wenn der Wellenabschnitt an der Fluidversorgungseinrichtung radial gelagert ist.

Hierdurch kann ebenfalls Bauraum eingespart werden, da separate Lagerschilde zur Lagerung des Wellenabschnittes nicht vorgesehen werden müssen.

Die Fluidversorgungseinrichtung ist vorzugsweise eine gehäusefeste Einrichtung. In diesem Fall sind die erste und die zweite Reibkupplung bzw. die Trennkupplung vorzugsweise über Drehdurchführungen mit dem ersten Axialabschnitt bzw. dem zweiten Axialabschnitt verbunden.

Ferner ist es möglich, in dem Bereich der Trennkupplung ein Zweimassenschwungrad oder ein sonstiges Dämpfungselement mit zu integrieren.

Ausführungsbeispiele der Erfindung sind in der Zeichnung dargestellt und werden in der nachfolgenden Beschreibung näher erläutert. Es zeigen:
- Fig. 1: eine schematische Längschnittansicht durch eine obere Hälfte einer ersten Ausführungsform eines erfindungsgemäßen Antriebsstranges;
- Fig. 2: eine schematische Längschnittansicht durch eine weitere Ausführungsform eines erfindungsgemäßen Antriebsstranges.

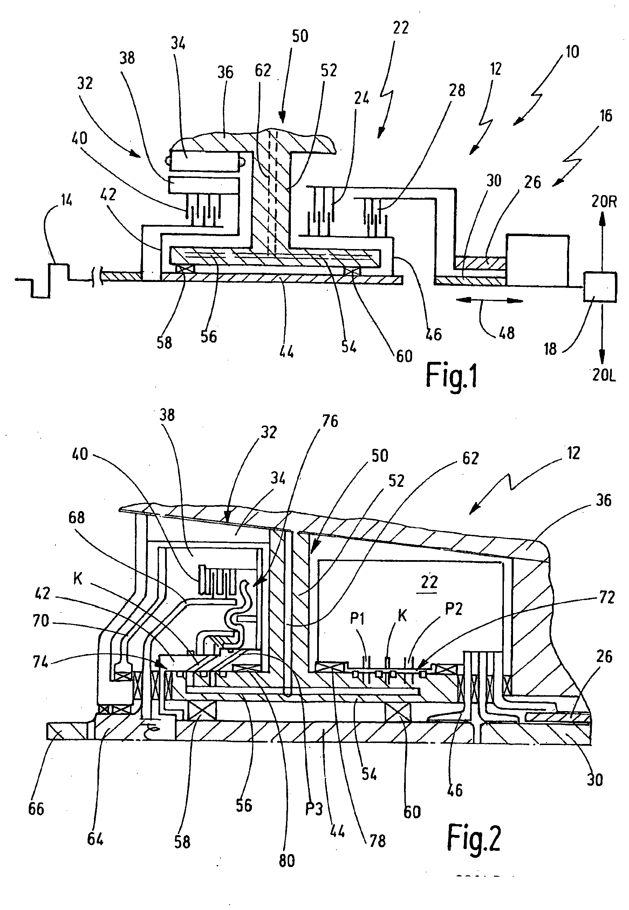

In Fig. 1 ist ein Kraftfahrzeug schematisch dargestellt und generell mit 10 bezeichnet. Das Kraftfahrzeug 10 weist einen Antriebsstrang 12 auf. Der Antriebsstrang 12 beinhaltet einen Antriebsmotor 14, wie bspw. einen Verbrennungsmotor und ein Doppelkupplungsgetriebe 16, dessen Eingang mit dem Antriebsmotor 14 verbunden oder verbindbar ist und dessen Ausgang mit einem Differential 18 verbunden ist. Das Differential 18 verteilt die Antriebsleistung auf zwei schematisch angedeutete angetriebene Räder 20L, 20R des Kraftfahrzeuges.

Das Doppelkupplungsgetriebe 16 weist eine Doppelkupplungsanordnung 22 auf. Die Doppelkupplungsanordnung 22 beinhaltet eine erste Reibkupplung 24, deren Ausgangsglied mit einer ersten Getriebeeingangswelle 26 verbunden ist. Ferner beinhaltet die Doppelkupplungsanordnung 22 eine zweite Reibkupplung 28, deren Ausgangsglied mit einer zweiten Getriebeeingangswelle 30 verbunden ist. Die erste und die zweite Getriebeeingangswelle 26, 30 sind koaxial zueinander angeordnet und jeweils mit einem Teilgetriebe des Doppelkupplungsgetriebes verbunden, von denen eines die geraden Gangstufen und das andere die ungeraden Gangstufen beinhaltet.

Die zwei Reibkupplungen 24, 28 sind vorzugsweise als nass laufende Lamellenkupplungen ausgebildet und sind, wie dargestellt, vorzugsweise in axialer Richtung nebeneinander angeordnet.

Der Antriebsstrang 12 beinhaltet ferner eine elektrische Maschine 32. Die elektrische Maschine 32 weist einen Stator 34 auf, der fest mit einem Gehäuse 36 des Antriebsstranges 12 verbunden ist.

Die elektrische Maschine 32 ist vorzugsweise als Innenläufer ausgebildet und weist einen radial innenliegenden Rotor 38 auf. Der Rotor 38 ist über eine Trennkupplung 40 mit einer Ausgangswelle des Antriebsmotors 14 verbunden. Die Trennkupplung 40 ist vorzugsweise ebenfalls als nass laufende Lamellenkupplung ausgebildet.

Ferner sind die erste und die zweite Reibkupplung 24, 28 sowie die Trennkupplung 40 vorzugsweise fluidisch betätigbar, also mittels eines Fluides wie eines Hydrauliköls betätigbar. Die Trennkupplung 40 ist vorzugsweise als "*normally closed*"-Kupplung ausgebildet.

Der Rotor 38 ist ferner über ein Verbindungsglied 42 mit einem Wellenabschnitt 44 verbunden, der vorzugsweise koaxial zu der Ausgangswelle des Antriebsmotors 14 angeordnet ist. Genauer gesagt ist das Verbindungsglied 42 mit einem ersten axialen Ende des Wellenabschnittes 44 verbunden. Ein zweites axiales Ende des Wellenabschnittes 44 ist mit einem Eingangsglied 46 der Doppelkupplungsanordnung 22 verbunden. Das Eingangsglied 46 bildet ein gemeinsames Eingangsglied für die erste Reibkupplung 24 und die zweite Reibkupplung 28.

Die Trennkupplung 40, die erste Reibkupplung 24 und die zweite Reibkupplung 28 sind in einer axialen Richtung 48 jeweils versetzt zueinander angeordnet. Hierdurch ergibt sich eine radial kompakte Bauweise.

Bei 50 ist eine Fluidversorgungseinrichtung gezeigt. Die Fluidversorgungseinrichtung ist gehäusefest ausgebildet und weist einen Radialabschnitt 52 auf, der zwischen der elektrischen Maschine und der Doppelkupplungsanordnung 22 angeordnet ist. Ferner weist die Fluidversorgungseinrichtung 50 einen ersten Axialabschnitt 54 auf, der mit dem Radialabschnitt 52 verbunden ist und sich in einen Bereich radial innerhalb der Doppelkupplungsanordnung 22 erstreckt. Die Fluidversorgungseinrichtung 50 weist ferner einen zweiten Axialabschnitt 56 auf, der mit dem Radialabschnitt 52 verbunden ist und sich in einen Bereich radial innerhalb der elektrischen Maschine bzw. radial innerhalb der Trennkupplung 40 erstreckt. Der erste Axialabschnitt 54 und der zweite Axialabschnitt 56 erstrecken sich folglich in axialer Richtung 48 in entgegengesetzte Richtungen ausgehend von dem Radialabschnitt 52.

Die Axialabschnitte 54, 56 sind dabei parallel zu dem Wellenabschnitt 44 angeordnet. Ferner ist der Wellenabschnitt 44 in radialer Richtung über ein erstes Lager 58 und ein axiales hierzu versetzt angeordnetes zweites Lager 60 radial gelagert.

Das axiale Ende des ersten Axialabschnittes 54 grenzt an das Eingangsglied 46 an. Das axiale Ende des zweiten Axialabschnittes 56 grenzt an das Verbindungsglied 42 an.

Aus Gründen einer übersichtlicheren Darstellung sind weitere Radiallager zum Lagern des Rotors 38 sowie der sonstigen Wellen und ggf. vorhandene Axiallager nicht dargestellt.

Die Fluidversorgungseinrichtung 50 weist eine sich durch den Radialabschnitt 52 und die Axialabschnitte 54, 56 erstreckende Fluidkanalanordnung 62 auf. Über die Fluidkanalanordnung 62 kann Fluid mit unterschiedlichen Drücken den Kupplungen 24, 28, 40 zu deren Betätigung und/oder zu deren Kühlung zugeführt werden. Es versteht sich dabei, dass die Fluidkanalanordnung 62 nicht nur einen Fluidkanal sondern eine Mehrzahl von Fluidkanälen beinhaltet, die aus Gründen einer übersichtlicheren Darstellung in Fig. 1 nicht dargestellt sind.

In Fig. 2 ist eine zweite Ausführungsform eines erfindungsgemäßen Antriebsstranges 12 dargestellt, der hinsichtlich Aufbau und Funktionsweise generell dem Antriebsstrang 12 der Fig. 1 entspricht. Gleiche Elemente sind daher durch gleiche Bezugszeichen gekennzeichnet. Im Folgenden werden im Wesentlichen die Unterschiede erläutert.

Es ist in Fig. 2 dargestellt, dass eine Kurbel 66 des Antriebsmotors 14 mit einer Eingangswelle 64 verbunden ist, die über ein nicht näher bezeichnetes Glied mit einem Innenlamellenträger 68 der Trennkupplung 40 verbunden ist. Ein Außenlamellenträger der Trennkupplung 40 ist fest mit dem Rotor 38 verbunden oder durch den Rotor 38 gebildet.

Der Rotor 38 ist ferner über ein Lagerglied 70 drehbar an dem Gehäuse 36 gelagert.

Ferner ist in Fig. 2 eine erste Drehdurchführung 72 zu erkennen, die den ersten Axialabschnitt 54 mit der Doppelkupplungsanordnung 22 verbindet. Über die erste Drehdurchführung 72 werden vorzugsweise ein Anschluss P1 zum Betätigen der ersten Reibkupplung 24, ein Anschluss P2 zum Betätigen der zweiten Reibkupplung 28 sowie ein Anschluss K2 zum Kühlen der zwei Reibkupplungen 24, 28 bereitgestellt.

An dem zweiten Axialabschnitt 56 ist eine zweite Drehdurchführung 74 angeordnet. Über die zweite Drehdurchführung 74 werden ein Anschluss P3 zum Betätigen der Trennkupplung 40 sowie ein Anschluss K zum Kühlen der Trennkupplung 40 und/oder der elektrischen Maschine 32 bereitgestellt.

Radial außerhalb der zweiten Drehdurchführung 74 ist schematisch ein Trennkupplungsaktuator 76 gezeigt.

Ein rotierender Abschnitt der ersten Drehdurchführung 72 ist mittels wenigstens eines dritten Lagers 78 drehbar an dem ersten Axialabschnitt 54 gelagert. Ein drehbarer Abschnitt der zweiten Drehdurchführung 74, der mit dem Rotor 38 verbunden ist, ist mittels wenigstens eines vierten Lagers 80 drehbar an dem zweiten Axialabschnitt 56 gelagert.

## Patentansprüche

1. Antriebsstrang (12) für ein Kraftfahrzeug (10), mit einem Antriebsmotor (14), mit einem Doppelkupplungsgetriebe (16), das eine Doppelkupplungsanordnung (22) mit einer ersten und einer zweiten Reibkupplung (24, 28) aufweist, mit einer elektrischen Maschine (32), deren Rotor (38) mit einem Eingangsglied (46) der Doppelkupplungsanordnung (22) verbunden ist, und mit einer Fluidversorgungseinrichtung (50),
wobei die elektrische Maschine (32) in einer axialen Richtung (48) versetzt gegenüber der Doppelkupplungsanordnung (22) angeordnet ist, wobei die Fluidversorgungseinrichtung (50) einen Radialabschnitt (52) aufweist, der zwischen der elektrischen Maschine (32) und der Doppelkupplungsanordnung (22) angeordnet ist
**dadurch gekennzeichnet, dass** die Fluidversorgungseinrichtung (50) einen ersten Axialabschnitt (54) aufweist, der mit dem Radialabschnitt (52) verbunden ist und sich in einen Bereich radial innerhalb der Doppelkupplungsanordnung (22) erstreckt.

2. Antriebsstrang (12) für ein Kraftfahrzeug (10), mit einem Antriebsmotor (14), mit einem Doppelkupplungsgetriebe (16), das eine Doppelkupplungsanordnung (22) mit einer ersten und einer zweiten Reibkupplung (24, 28) aufweist, mit einer elektrischen Maschine (32), deren Rotor (38) mit einem Eingangsglied (46) der Doppelkupplungsanordnung (22) verbunden ist, und mit einer Fluidversorgungseinrichtung (50),
wobei die elektrische Maschine (32) in einer axialen Richtung (48) versetzt gegenüber der Doppelkupplungsanordnung (22) angeordnet ist, wobei die Fluidversorgungseinrichtung (50) einen Radialabschnitt (52) aufweist, der zwischen der elektrischen Maschine (32) und der Doppelkupplungsanordnung (22) angeordnet ist
**dadurch gekennzeichnet, dass** die Fluidversorgungseinrichtung (50) zum Kühlen der Reibkupplungen (24, 28) der Doppelkupplungsanordnung (22) ausgebildet ist. [0010]

3. Antriebsstrang nach Anspruch 1. oder 2, **dadurch gekennzeichnet, dass** die Fluidversorgungseinrichtung (50) einen zweiten Axialabschnitt (56) aufweist, der mit dem Radialabschnitt (52) verbunden ist und sich in einen Bereich radial innerhalb der elektrischen Maschine (32) erstreckt.

4. Antriebsstrang nach einem der Ansprüche 1 - 3, **dadurch gekennzeichnet, dass** der Rotor (38) der elektrischen Maschine (32) über eine Trennkupplung (40) mit einer Ausgangswelle des Antriebsmotors (14) verbunden ist.

5. Antriebsstrang nach Anspruch 4, **dadurch gekennzeichnet, dass** die Trennkupplung (40) fluidisch betätigbar ist.

6. Antriebsstrang nach Anspruch 4 oder 5, **dadurch gekennzeichnet, dass** die Trennkupplung (40) radial innerhalb der elektrischen Maschine (32) angeordnet ist.

7. Antriebsstrang nach einem der Ansprüche 4 - 6, **dadurch gekennzeichnet, dass** die Trennkupplung (40) als normalerweise geschlossene Trennkupplung (40) ausgebildet ist.

8. Antriebsstrang nach einem der Ansprüche 4 - 6, **dadurch gekennzeichnet, dass** die Trennkupplung (40) als normalerweise offene Trennkupplung (40) ausgebildet ist.

9. Antriebsstrang nach einem der Ansprüche 1 - 8, **dadurch gekennzeichnet, dass** der Rotor (38) der elektrischen Maschine (32) mit dem Eingangsglied (46) der Doppelkupplungsanordnung (22) über einen Wellenabschnitt (44) verbunden ist, der radial innerhalb der Fluidversorgungseinrichtung (50) angeordnet ist.

10. Antriebsstrang nach Anspruch 9, **dadurch gekennzeichnet, dass** der Wellenabschnitt (44) an der Fluidversorgungseinrichtung (50) radial gelagert ist.

## Claims

1. Drive train (12) for a motor vehicle (10), comprising a drive motor (14), comprising a dual clutch transmission (16), which has a dual clutch arrangement (22) including a first and a second friction clutch (24, 28), comprising an electrical machine (32), the rotor (38) of which being connected to an input member (46) of the dual clutch arrangement (22), and comprising a fluid supply device (50),
wherein the electric machine (32) is arranged so as to be displaced in an axial direction (48) against the dual clutch arrangement (22), wherein the fluid supply device (50) comprises a radial portion (52) which is arranged between the electric machine (32) and the dual clutch arrangement (22),
**characterized in that** the fluid supply device (50) comprises a first axial portion (54) which is connected to the radial portion (52) and which extends in an area radially within the dual clutch arrangement (22).

2. Drive train (12) for a motor vehicle (10), comprising a drive motor (14), comprising a dual clutch transmission (16), which has a dual clutch arrangement (22) including a first and a second friction clutch (24, 28), comprising an electrical machine (32), the rotor (38) of which being connected to an input member (46) of the dual clutch arrangement (22), and comprising a fluid supply device (50),
wherein the electric machine (32) is arranged so as to be displaced in an axial direction (48) against the dual clutch arrangement (22), wherein the fluid supply device (50) comprises a radial portion (52) which is arranged between the electric machine (32) and the dual clutch arrangement (22),
**characterized in that** the fluid supply device (50) is adapted for cooling the friction clutches (24, 28) of the dual clutch arrangement (22).

3. Drive train according to claim 1 or 2, **characterized in that** the fluid supply device (50) comprises a second axial portion (56) which is connected to the radial portion (52) and which extends in an area radially within the electric machine (32).

4. Drive train according to any of claims 1 to 3, **characterized in that** the rotor (38) of the electric machine (32) is connected to an output shaft of the drive motor (14) via a separation clutch (40).

5. Drive train according to claim 4, **characterized in that** the separation clutch (40) is fluidically acuatable.

6. Drive train according to claim 4 or 5, **characterized in that** the separation clutch (40) is arranged radially within the electric machine (32).

7. Drive train according to any of claims 4 to 6, **characterized in that** the separation clutch (40) is formed as a normally closed separation clutch (40).

8. Drive train according to any of claims 4 to 6, **characterized in that** the separation clutch (40) is formed as a normally open separation clutch (40).

9. Drive train according to any of claims 1 to 8, **characterized in that** the rotor (38) of the electric machine (32) is connected via a shaft portion (44) to the input member (46) of the dual clutch arrangement (22), which shaft portion (44) is arranged radially within the fluid supply device (50).

10. Drive train according to claim 9, **characterized in that** the shaft portion (44) is radially mounted on the fluid supply device (50).

## Revendications

1. Chaîne cinématique (12) pour un véhicule automobile (10), comprenant un moteur d'entraînement (14), une transmission à double embrayage (16) qui présente un agencement de double embrayage (22) avec un premier et un deuxième embrayage à friction (24, 28), une machine électrique (32), dont le rotor (38) est connecté à un organe d'entrée (46) de l'agencement de double embrayage (22), et un dispositif d'alimentation en fluide (50),
la machine électrique (32) étant disposée de manière décalée par rapport à l'agencement de double embrayage (22) dans une direction axiale (48), le dispositif d'alimentation en fluide (50) présentant une portion radiale (52) qui est disposée entre la machine électrique (32) et l'agencement de double embrayage (22),
**caractérisée en ce que** le dispositif d'alimentation en fluide (50) présente une première portion axiale (54) qui est connectée à la portion radiale (52) et qui s'étend dans une région radialement à l'intérieur de l'agencement de double embrayage (22).

2. Chaîne cinématique (12) pour un véhicule automobile (10), comprenant un moteur d'entraînement (14), une transmission à double embrayage (16) qui présente un agencement de double embrayage (22) avec un premier et un deuxième embrayage à friction (24, 28), une machine électrique (32), dont le rotor (38) est connecté à un organe d'entrée (46) de l'agencement de double embrayage (22), et un dispositif d'alimentation en fluide (50),
la machine électrique (32) étant disposée de manière décalée par rapport à l'agencement de double embrayage (22) dans une direction axiale (48), le dispositif d'alimentation en fluide (50) présentant une portion radiale (52) qui est disposée entre la machine électrique (32) et l'agencement de double embrayage (22),
**caractérisée en ce que** le dispositif d'alimentation en fluide (50) est conçu pour refroidir les embrayages à friction (24, 28) de l'agencement de double embrayage (22). [0010]

3. Chaîne cinématique selon la revendication 1 ou 2, **caractérisée en ce que** le dispositif d'alimentation en fluide (50) présente une deuxième portion axiale (56) qui est connectée à la portion radiale (52) et qui s'étend dans une région radialement à l'intérieur de la machine électrique (32).

4. Chaîne cinématique selon l'une quelconque des revendications 1 à 3, **caractérisée en ce que** le rotor (38) de la machine électrique (32) est connecté par le biais d'un embrayage de coupure (40) à un arbre de sortie du moteur d'entraînement (14).

5. Chaîne cinématique selon la revendication 4, **caractérisée en ce que** l'embrayage de coupure (40) peut être actionné fluidiquement.

6. Chaîne cinématique selon la revendication 4 ou 5, **caractérisée en ce que** l'embrayage de coupure (40) est disposé radialement à l'intérieur de la machine électrique (32).

7. Chaîne cinématique selon l'une quelconque des revendications 4 à 6, **caractérisée en ce que** l'embrayage de coupure (40) est réalisé sous forme d'embrayage de coupure normalement fermé (40).

8. Chaîne cinématique selon l'une quelconque des revendications 4 à 6, **caractérisée en ce que** l'embrayage de coupure (40) est réalisé sous forme d'embrayage de coupure normalement ouvert (40).

9. Chaîne cinématique selon l'une quelconque des revendications 1 à 8, **caractérisée en ce que** le rotor (38) de la machine électrique (32) est connecté à l'organe d'entrée (46) de l'agencement de double embrayage (22) par le biais d'une portion d'arbre (44) qui est disposée radialement à l'intérieur du dispositif d'alimentation en fluide (50).

10. Chaîne cinématique selon la revendication 9, **caractérisée en ce que** la portion d'arbre (44) est supportée radialement au niveau du dispositif d'alimentation en fluide (50).
